# EUROPÄISCHE PATENTSCHRIFT

(11) **EP 4 655 705 B1**
(45) Veröffentlichungstag und Bekanntmachung des Hinweises auf die Patenterteilung: **21.10.2026**
(21) Anmeldenummer: 24707679.7
(22) Anmeldetag: 22.01.2024
(51) Int. Cl.: G06K 19/06, G09F 3/03

(54) **SICHERUNGSEINRICHTUNG**
SECURING DEVICE
DISPOSITIF DE SÉCURISATION

(30) Priorität: 23.01.2023 DE 102023101576
(43) Veröffentlichungstag der Anmeldung: 03.12.2025
(73) Patentinhaber: Hochschule Kaiserslautern, 67659 Kaiserslautern (DE)
(72) Erfinder: MAGIN, Michael, 66822 Lebach (DE)
(74) Vertreter: Patentanwaltskanzlei Vièl & Wieske PartGmbB
(86) Internationale Anmeldenummer: PCT/DE2024/100048
(87) Internationale Veröffentlichungsnummer: WO 2024/156310

(56) Entgegenhaltungen:
- DE-T2- 68 920 300

## Beschreibung

Die vorliegende Erfindung betrifft eine Sicherungseinrichtung, wobei die Sicherungseinrichtung mindestens einen verdrillten Draht aufweist, wobei der verdrillte Draht einen oder mehrere Drähte aufweist, sowie ein Verfahren zur Validierung der Sicherheit mittels einer Sicherungseinrichtung.

Die physische Manipulation von Objekten, Geräten, Anlagen, Vorrichtungen und/oder dergleichen ist schon immer ein großes Problem für Hardwarehersteller, da böswillige Parteien auf ihre Hardware zugreifen und versuchen können, sie für einen oder mehrere böswillige Zwecke zu kompromittieren.

Diese Besorgnis nimmt ständig zu, da kleinere Hardware-Elemente böswillig in solche Objekte, Geräte, Anlagen und/oder Ausrüstungen während einer oder mehrerer Stationen ihrer Lieferkette eingefügt werden können, um die Kontrolle über zumindest einige ihrer Ressourcen, Daten und/oder Kommunikation zu erlangen bzw. diese Ressourcen, Daten und/oder Kommunikation zu manipulieren. Während die Verhinderung einer solchen Manipulation äußerst schwierig und ressourcenaufwändig sein kann, ist die Erkennung der Manipulation etwas einfacher und ermöglicht es, den Schaden durch Manipulation zu reduzieren.

Eines der am häufigsten verwendeten Mittel zur Erkennung von Manipulationen sind manipulationssichere Elemente, die in Form von Siegeln verwendet werden können, um das Objekt, die Vorrichtung, die Ausrüstung, die Verpackung, die Schutzhülle und/oder die Geräte, die für Manipulationen anfällig sind, zu versiegeln. Insbesondere können diese Siegel an abnehmbaren Teilen, Öffnungen, Anschlüssen und/oder dergleichen angebracht werden, so dass ein Versuch, diese Objekte, Vorrichtungen, Ausrüstungen, Verpackungen, Schutzhüllen und/oder Geräte zu manipulieren, um auf ihre inneren Elemente zuzugreifen, im Wesentlichen zu einer Beschädigung des Siegels in einer Weise führen kann, dass das Siegel nicht in seinen vorherigen Zustand zurückversetzt werden kann.

Als solche Siegel sind beispielsweise Sicherheitslacke bekannt. Dabei kann der Sicherheitslack beispielsweise auf Schrauben angebracht werden. Werden diese Schrauben geöffnet, wird der Sicherheitslack beschädigt. Auf diese Weise kann ein Öffnen einer zu sichernden Vorrichtung erkannt werden. Um das Verdecken der Manipulation durch Wiederaufbringung eines Sicherheitslacks zu verhindern, kann dieser durch Partikelzusetzungen, beispielsweise durch fluoreszierende Partikel, individualisiert werden.

Es ist weiterhin bekannt, Vorrichtungen, beispielsweise Zählerkästen, Sicherheitstüren, Kisten, Container oder LKWs, mit Plombendraht und Plomben gegen unbefugte Eingriffe zu sichern und auf diese Weises Manipulationsversuche zu erkennen. Die Plomben bestehen dabei beispielsweise aus Kunststoff, Blei oder Aluminium und sind derart mit dem Plombendraht verpresst, dass ein zerstörungsfreies Lösen des Plombendrahtes nicht möglich ist. Die Plombe kann dabei eine Gravur aufweisen, die mittels eines individualisierbaren Plombenstempel aufgepresst wird, um die Kopie der Plombe nach dem unbefugten Eingriff zu erschweren und damit die Manipulation zu verdecken.

Es sind auch Drahtsicherungen als Sicherungseinrichtungen bekannt. Diese Drahtsicherungen dienen als Verdrehsicherungen von zwei oder mehr Schrauben oder Muttern und verhindert ein unbeabsichtigtes oder ungewolltes Lösen der Schrauben oder Muttern, indem diese mit einem verdrillten Draht umwickelt werden.

Nachteilig an den bekannten Sicherungseinrichtungen ist, dass Lacküberzüge oder Plomben einen geringen Schutz gegen professionelle Fälschungen bieten, da sie weitgehend generisch bzw. leicht kopierbar sind. Beispielsweise lassen sich gravierte Plombenstempel mit einer CNC-Maschine nachfräsen oder ein Sicherheitslack kann auf seine chemischen und optischen Eigenschaften untersucht und kopiert werden.

Aus dem Stand der Technik sind weitere Sicherungseinrichtungen bekannt.

Die EP 0 229 551 A1 betrifft eine Plombe mit mehradrigem Draht. Diese umfasst einen Draht, der durch den zu versiegelnden Gegenstand verläuft und eine Schlaufe bildet. Dieser Draht ist aus Litzen gebildet, die jeweils eine Vielzahl von Filamenten umfassen. Die Plombe, die die beiden Enden der Schleife verbindet, wird durch eine Harzmatrix mit einer polierten Fläche gebildet, mit der die Enden der verschiedenen Filamente bündig sind. Die Signatur des Siegels besteht aus einer zufälligen Verteilung der Enden auf der polierten Fläche.

Die US 2021/0295745 A1 beschreibt ein Verfahren, eine Vorrichtung und ein Computerprogramm zum Detektieren von Manipulationen. Das Verfahren besteht dabei aus einem Versiegelungsschritt und einem Schritt zur Verifikation der Versiegelung. Der Versiegelungsschritt umfasst das Analysieren eines zum Versiegeln eines Objekts angebrachten Siegels als manipulationssicheres Element, das Aufzeichnen eines oder mehrerer Herstellungsfehler des Siegels, die basierend auf der Analyse identifiziert wurden, wobei jeder der einen oder mehreren Herstellungsfehler einen oder mehrere nicht reproduzierbare Abweichungen umfasst, Siegelerzeugungsanweisungen, die zum Herstellen des Siegels verwendet werden, und das Erzeugen einer Signatur, die den einen oder die mehrere Herstellungsfehler umfasst. Der Schritt zur Verifikation der Versiegelung umfasst das Erhalten der Signatur, das Analysieren des Siegels, welches das Objekte versiegelt, und das Bestimmen, ob das Objekt manipuliert ist, basierend auf einem Vergleich zwischen dem analysierten Siegel und der Signatur.

Die US 2015/0078622 A1 beschreibt verschiedene Überwachungssysteme und Verfahren zum Verwenden von Bildern in Bezug auf Manipulationserkennung. Die Überwachungssysteme umfassen dabei eine Überwachungsvorrichtung, die an einem Monitorziel anbringbar ist und die eine bildbasierte Manipulationserkennungsschaltung umfasst. Die Manipulationserkennungsschaltung ist betreibbar, um eine Manipulation an der Monitorvorrichtung zumindest teilweise auf einem Bildvergleich zu erkennen.

Die CN 2 01 927 280 U betrifft ein Sicherungsseil zur Sicherung eines Öllasters. Das Sicherungsseil kann in unterschiedlichen Bereichen mit unterschiedlichen Mustern und Farben versehen werden. Die Verifikation, ob eine Manipulation vorgenommen wurde, erfolgt über den Schnittpunkt des Seils.

Die CN 1 14 820 002 A betrifft ein Sicherungsseil, wobei das Sicherungsseil durch Verdrillen eines elastischen mit einem unelastischen Garn hergestellt wird. Zieht sich das Sicherungsseil nach der Produktion zusammen, so bildet das unelastische Garn ein zufälliges Muster aus Bögen. Das Muster kann im Internet gespeichert und abgerufen werden. Um eine Kopie des Musters durch 3D-Druck auszuschließen, kann an dem Seil gezogen werden, um dessen elastische Eigenschaften zu verifizieren.

Die CN 2 01 984 724 U betrifft einen Sicherungsdraht mit Plombe. Der Sicherungsdraht weist mehrere verdrehte Metalldrähte auf. Die Metalldrähte werden von einer (transparenten) Hülle mit Platten umhüllt. Die Platten bilden ein Muster.

Die DE 10 2012 000 293 A1 betrifft ein Etikett zur Kennzeichnung eines Bauteils und/oder Leiters zum elektrischen Anschluss in einem Schaltschrank und dergleichen und eine Messsonde zum Auslesen des Etiketts.

DE68920300T2 lehrt, Sicherheitsinformationen in optische/magnetische Codes (z. B. Strichcodes) auf Karten/Etiketten zu integrieren. DE68920300T2 erwähnt die Twistor-Technologie mit verdrillten Drähten als Stand der Technik zur magnetischen Datenspeicherung.

Der Erfindung liegt die Aufgabe zugrunde, einen verbesserten, nicht fälschbaren, eindeutig und sicher zu identifizierenden und manipulationssicheren Schutz vor Betätigung, Veränderung, Manipulation oder dem Entfernen von Bauteilen, Komponenten, Einrichtungen oder Systemen bereitzustellen.

Diese Aufgabe wird mit einer Sicherungseinrichtung gemäß dem Oberbergriff des Anspruchs 1 dadurch gelöst, dass der eine oder die mehreren Drähte ein Muster aufweisen, wobei der verdrillte Draht ein individuelles Muster als einmaligen Fingerabdruck aufweist.

Als Muster ist dabei jede erfassbare, dauerhafte Abweichung auf der Oberfläche eines Drahts eingeschlossen. Das Muster kann dabei ein stochastisches Muster sein. Einzelne Abschnitte des Musters können sich periodisch wiederholen.

Das Muster kann auf einen oder mehrere Drähte aufgebracht werden. Das Muster kann auf einen geraden Draht oder einen oder mehrere verdrillte Drähte aufgebracht werden. Es kann direkt auf den Draht oder auf eine Isolierung des Drahtes aufgebracht werden. In dem Fall in dem das Muster auf einen oder mehrerer gerade Drähte aufgebracht wird entsteht nach dem Verdrillen eines oder mehrerer mit dem Muster versehenen Drähte ein individuelles Muster als einmaliger Fingerabdruck. Die Erfassung des Musters erfolgt mit bildgebenden Verfahren, beispielsweise optisch, per Ultraschall oder radiographisch.

Vorteilhaft dient das individuelle Muster als einmaliger Fingerabdruck. Dieser lässt sich nicht fälschen, ist sicher zu identifizieren und bietet einen manipulationssicheren Schutz vor Betätigung, Veränderung, Manipulation und/oder Entfernen von Bauteilen, Komponenten oder Systemen. Insbesondere kann der verdrillte Draht mit dem Muster als Drahtsicherung an Schrauben und Muttern oder in Kombination mit einer Plombe als Plombendraht verwendet werden. Ein Lösen und Wiederverschließen der Verbindung führen dabei zwangsweise zu einer Veränderung der Verdrillung des Drahtes, wodurch ein neues individuelles Muster und ein neuer Fingerabdruck generiert wird, der mit dem ursprünglich erfassten individuellen Muster und Fingerabdruck verglichen werden kann. Bei einer Manipulation der Sicherungseinrichtung verschieben sich die miteinander verdrillten Drähte gegeneinander, wodurch sich das individuelle Muster auf dem verdrillten Draht verändert.

Bei einer Abweichung des individuellen Musters lässt sich somit einfach eine Manipulation nachweisen. Die Sicherungseinrichtung kann als Siegel zum Versiegeln eines Objekts, einer Vorrichtung, einer Ausrüstung, einer Verpackung, einer Schutzhülle und/oder eines Geräts verwendet werden.

Zur Sicherung eines Objekts, einer Vorrichtung, einer Ausrüstung, einer Verpackung, einer Schutzhülle und/oder eines Geräts wird ein Muster auf den verdrillten Draht aufgebracht. Alternativ kann das Muster vor dem Verdrillen auf einen oder mehrere zu verdrillende Drähte aufgebracht werden. Das zu sichernde Objekt wird mit dem verdrillten Draht gesichert. Dabei kann diese Sicherung in Form einer Versiegelung, beispielsweise in Kombination mit einer Plombe oder durch Umwickeln der zu öffnenden Teile des zu sichernden Objekts erfolgen. Nach dem Versiegeln kann das individuelle Muster auf der Sicherungseinrichtung mit optischen Mitteln erfasst werden und diese Aufnahme gespeichert werden. Zur Validierung der Sicherung und der Feststellung, ob eine Manipulation erfolgt ist, kann das individuelle Muster auf der Sicherungseinrichtung nach einem beliebigen Zeitintervall wiederholt mit bildgebenden Verfahren erfasst werden. Diese Aufnahme kann zur Feststellung von Manipulationen mit der ersten Aufnahme verglichen werden. Bei diesem Vergleich können natürliche Alterungserscheinungen der Sicherungseinrichtung berücksichtigt werden. Das Validieren des individuellen Musters kann in beliebigen Zeitintervallen wiederholt werden. Der Vergleich der Aufnahmen kann dabei neben der ersten Aufnahme alle vorgegangenen Aufnahmen mit einschließen. Vorteilhaft lässt sich bei mehreren Validierungen das Zeitintervall, in dem eine Manipulation der Sicherungseinrichtung erfolgt ist, genauer bestimmen.

Eine Ausgestaltung der Erfindung besteht darin, dass in dem Muster Informationen abspeicherbar sind.

Vorteilhaft kann das Muster neben der Sicherung von Vorrichtungen auch zur Speicherung von Informationen genutzt werden. Dabei kann sich ein Musterabschnitt, der die Informationen enthält, periodisch wiederholen. Vorteilhaft kann dadurch das Auslesen der Informationen erleichtert werden und/oder möglicherweise durch Abnutzung oder Alterung beschädigte Musterabschnitte redundant ausgestaltet werden.

Dabei ist es zweckmäßig, dass die Informationen Produkt- und/oder Prozesseigenschaften umfassen.

Die in den Mustern abgespeicherten Informationen können Informationen über das zu sichernde Objekt umfassen.

Eine Ausgestaltung der Erfindung besteht darin, dass das Muster Informationen zur Herstellung und/oder einer Wartung eines Objekts, einer Vorrichtung, Ausrüstung und/oder eines Geräts umfasst.

Eine weitere Ausgestaltung der Erfindung besteht darin, dass das Muster ein QR-Code ist.

Die in einem QR-Code gespeicherten Informationen lassen sich besonders einfach auslesen.

Es ist zur Erfindung gehörig, dass der mindestens eine Draht mindestens eine plastische Verformung aufweist.

Die plastische Verformung kann dabei beispielsweise eine Quetschung, eine Kerbe oder ein Knick sein. Ein Knick ist dabei durch Biegung eines geraden Drahts erfolgte dauerhafte Veränderung des Drahts. Der Knick kann durch starke Krümmung des Drahts erzeugt werden. Der Knick kann dabei eine Kerbe im Draht aufweisen. Bei der Verwendung eines einzigen Drahts weist das geschlossene Ende des verdrillten Drahts einen Knick auf. Vorteilhaft kann anhand des Knicks erkannt werden, ob ein bereits verdrillter Draht wieder aufgedrillt wurde. An der Stelle des Knicks ist dabei bei dem aufgedrillten Draht eine sichtbare Kerbe zu erkennen. Durch diese Kerbe wird die Sicherheit der Sicherungseinrichtung erhöht, da diese bei einem wiederholten verdrillen des Drahtes erfassbar bleibt und somit eine Manipulation des Drahtes anzeigen kann.

Besonders vorteilhaft ist das Muster bei einer Auswertung in der Nähe der plastischen Verformung besonders manipulationssicher. Eine Verschiebung der Drähte in der Nähe der plastischen Verformung bewirkt eine besonders große Veränderung des Musters. Diese Veränderung lässt sich bei der Auswertung des Musters besonders leicht erkennen.

Eine weitere Ausführungsform der Erfindung besteht darin, dass das Muster chemisch auftragbar ist.

Das Muster kann beispielsweise mittels eines mit Ätzmittel beschichteten Aufklebers und/oder Ätzstift auf den Draht aufgetragen werden.

Eine weitere Ausführungsform der Erfindung besteht darin, dass das Muster auf den Draht auflackierbar ist.

Das Muster kann dabei über einzelne Farbtropfen auf den Draht aufgebracht werden. Das Auftragen kann dabei beispielsweise durch Aufsprühen, Tupfen, Stempeln oder Drucken erfolgen. Die Farbtropfen können dabei einheitliche und/oder unterschiedliche Farben aufweisen. Die Farben können dabei aus Sicherheitslacken bestehen. Die Farbtropfen werden bevorzugt stochastisch auf dem Draht verteilt.

Der Draht kann komplett oder teilweise mit einem Lack überzogen werden. Dabei können in den Lack Partikel oder andere Fremdstoffe eingebracht werden. Diese Partikel und/oder Fremdstoffe können das Muster bilden.

Eine weitere Ausgestaltung der Erfindung besteht darin, dass das Muster mechanisch auftragbar ist.

Das Muster kann dabei beispielsweise durch einen Stempel auf dem Draht aufgebracht werden.

Eine weitere Ausgestaltung der Erfindung besteht darin, dass das Muster durch einen Laser aufbringbar ist.

Vorteilhaft ist dabei, dass somit besonders schnell ein dauerhaftes Muster auf dem Draht erzeugt werden.

Die Erfindung betrifft auch ein Verfahren zur Validierung der Sicherheit mittels einer Sicherungseinrichtung gemäß Anspruch 11.

Das Verfahren umfasst die folgenden Schritte:
- Aufbringen eines Musters auf mindestens einen geraden Draht,
- Verdrillen des mindestens einen Drahts zur Generierung eines individuellen Fingerabdrucks,
- Versiegeln eines Objekts, einer Vorrichtung, einer Ausrüstung, einer Verpackung, einer Schutzhülle und/oder eines Geräts mit dem verdrillten Draht als Siegel,
- bildgebende Erfassung des ursprünglichen Musters auf dem Draht,
- Umwandeln des ursprünglich aufgenommenen Musters in Computercode,
- bildgebende Erfassung des Musters auf dem Draht nach einem Zeitintervall,
- Vergleich des nach einem Zeitintervall erfassten Musters mit dem ursprünglich aufgenommenen Muster zur Verifikation des Siegels.

Die bildgebende Erfassung umfasst dabei die optische oder radiographische Erfassung oder die Erfassung per Ultraschall. Der verdrillte Draht kann dabei facettenweise und/oder vollständig ausgewertet werden. Vorteilhaft erfolgt die Erfassung des Musters über mehrere Einzelbereiche hinweg.

Schließlich ist auch ein Verfahren zur Validierung der Sicherheit mittels einer Sicherungseinrichtung gemäß Anspruch 12 zur Erfindung gehörig.

Das Verfahren umfasst die folgenden Schritte:
- Verdrillen mindestens eines Drahts,
- Versiegeln eines Objekts, einer Vorrichtung, einer Ausrüstung, einer Verpackung, einer Schutzhülle und/oder eines Geräts mit dem verdrillten Draht als Siegel,
- Aufbringen eines Musters auf dem verdrillten Draht,
- bildgebende Erfassung des ursprünglichen Musters auf dem Draht,
- Umwandeln des ursprünglich aufgenommenen Musters in Computercode,
- bildgebende Erfassung des Musters auf dem Draht nach einem Zeitintervall,
- Vergleich des nach einem Zeitintervall erfassten Musters mit dem ursprünglich aufgenommenen Muster zur Verifikation des Siegels.

Im Folgenden werden Ausführungsformen der Erfindung anhand von Zeichnungen näher erläutert.

Es zeigen
- Fig. 1: eine perspektivische Ansicht einer erfindungsgemäßen Sicherungseinrichtung,
- Fig. 2: eine perspektivische Ansicht einer weiteren erfindungsgemäßen Sicherungseinrichtung,
- Fig. 3: eine perspektivische Ansicht einer weiteren erfindungsgemäßen Sicherungseinrichtung,
- Fig. 4: eine perspektivische Ansicht einer weiteren erfindungsgemäßen Sicherungseinrichtung,
- Fig. 5: eine perspektivische Detailansicht der erfindungsgemäßen Sicherungseinrichtung aus Fig. 1.

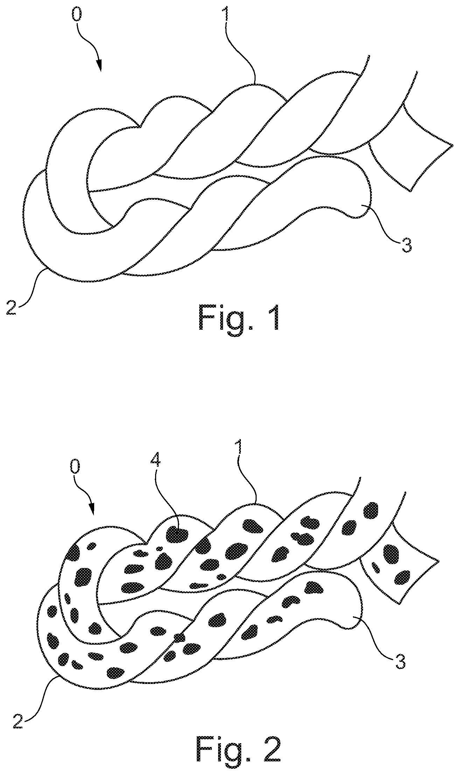

In Fig. 1 ist eine Sicherungseinrichtung 0 dargestellt. Die Sicherungseinrichtung 0 weist einen verdrillten Draht 1 auf. Auf den verdrillten Draht 1 kann ein Muster aufgetragen werden (nicht dargestellt). Der verdrillte Draht 1 weist eine plastische Verformung 2 in Form eines Knicks auf. An einem Ende besitzt der verdrillte Draht 1 eine Schlaufe 3. Die Sicherungseinrichtung kann als Siegel zum Versiegeln eines Objekts, einer Vorrichtung, Ausrüstung und/oder eines Geräts verwendet werden.

In Fig. 2 ist eine weitere Sicherungseinrichtung 0 dargestellt. Die Sicherungseinrichtung 0 weist einen verdrillten Draht 1 auf. Auf den verdrillten Draht 1 ist ein Muster 4 aufgetragen. Das Muster 4 besteht aus Farbtropfen, die durch Aufsprühen auf dem verdrillten Draht 1 aufgetragen werden. Die Farbtropfen können dabei unterschiedliche Farben aufweisen. Die Farben können aus Sicherheitslacken bestehen. Die Farbtropfen werden bevorzugt stochastisch auf dem Draht 1 verteilt. Der verdrillte Draht 1 weist eine plastische Verformung 2 in Form eines Knicks auf. An einem Ende besitzt der verdrillte Draht 1 eine Schlaufe 3. Die Sicherungseinrichtung 0 kann als Siegel zum Versiegeln eines Objekts, einer Vorrichtung, Ausrüstung und/oder eines Geräts verwendet werden.

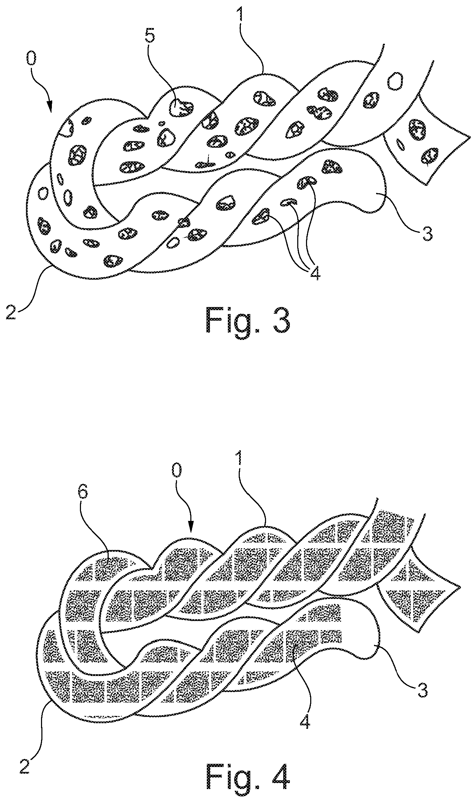

In Fig. 3 ist eine weitere Sicherungseinrichtung 0 dargestellt. Die Sicherungseinrichtung 0 weist einen verdrillten Draht 1 auf. Auf den verdrillten Draht 1 ist ein Muster 4 aufgetragen. Das Muster 4 besteht aus Einzelmarkierungen 5. Die Einzelmarkierungen 5 weisen jeweils ein bevorzugt stochastisches Muster auf. Das Muster 4 kann durch einen Lack mit in dem Lack eingebrachten Partikeln aufgebracht werden. Die Einzelmarkierungen 5 werden bevorzugt stochastisch auf dem Draht verteilt. Der verdrillte Draht 1 weist eine plastische Verformung 2 in Form eines Knicks auf. An einem Ende besitzt der verdrillte Draht 1 eine Schlaufe 3. Die Sicherungseinrichtung 0 kann als Siegel zum Versiegeln eines Objekts, einer Vorrichtung, Ausrüstung und/oder eines Geräts verwendet werden.

In Fig. 4 ist eine weitere Sicherungseinrichtung 0 dargestellt. Die Sicherungseinrichtung 0 weist einen verdrillten Draht 1 auf. Auf den verdrillten Draht 1 ist ein Muster 4 aufgetragen.

Das Muster 4 besteht aus sich periodisch wiederholenden Musterabschnitten 6. In den Musterabschnitten 6 sind Informationen abgespeichert. Die Informationen können Informationen zu einem mit der Sicherungseinrichtung gesicherten Produkt und/oder dessen Herstellung und/oder Wartung umfassen. Das Muster 4 kann beispielsweise mittels eines Lasers auf dem verdrillten Draht 1 aufgebracht werden. Der verdrillte Draht 1 weist eine plastische Verformung 2 in Form eines Knicks auf. An einem Ende besitzt der verdrillte Draht 1 eine Schlaufe 3. Die Sicherungseinrichtung 0 kann als Siegel zum Versiegeln eines Objekts, einer Vorrichtung, Ausrüstung und/oder eines Geräts verwendet werden.

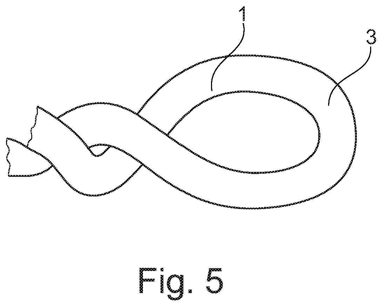

In Fig. 5 ist eine Detailansicht des geschlossenen Endes mit der Schlaufe 3 der Sicherungseinrichtung 0 aus Fig. 1 dargestellt.

## Patentansprüche

1. Sicherungseinrichtung (0), wobei die Sicherungseinrichtung (0) mindestens einen verdrillten Draht (1) aufweist, wobei der verdrillte Draht (1) einen oder mehrere Drähte aufweist, **dadurch gekennzeichnet, dass** der eine oder die mehreren Drähte ein Muster (4) aufweisen, wobei das Muster (4) eine erfassbare, dauerhafte Abweichung auf der Oberfläche des einen oder der mehreren Drähte ist, wobei ein individuelles Muster des verdrillten Drahtes (1) durch das Muster (4) des einen oder der mehreren Drähte in deren verdrilltem Zustand gebildet ist, so dass der verdrillte Draht (1) ein individuelles Muster als einmaligen Fingerabdruck aufweist.

2. Sicherungseinrichtung (0) gemäß Anspruch 1, **dadurch gekennzeichnet, dass** in dem Muster (4) Informationen abspeicherbar sind.

3. Sicherungseinrichtung (0) gemäß Anspruch 2, **dadurch gekennzeichnet, dass** die Informationen Produkt- und/oder Prozesseigenschaften umfassen.

4. Sicherungseinrichtung (0) gemäß Anspruch 2 oder 3, **dadurch gekennzeichnet, dass** das Muster (4) Informationen zur Herstellung und/oder Wartung eines Objekts, einer Vorrichtung, Ausrüstung und/oder eines Geräts umfasst.

5. Sicherungseinrichtung (0) gemäß einem der Ansprüche 2 bis 4, **dadurch gekennzeichnet, dass** das Muster (4) ein QR-Code ist.

6. Sicherungseinrichtung (0) gemäß einem der vorangegangenen Ansprüche, **dadurch gekennzeichnet, dass** der mindestens eine Draht (1) mindestens eine plastische Verformung (2) aufweist.

7. Sicherungseinrichtung (0) gemäß einem der Ansprüche 1 bis 6, **dadurch gekennzeichnet, dass** auf dem mindestens einem Draht das Muster (4) auflackierbar ist.

8. Sicherungseinrichtung (0) gemäß einem der Ansprüche 1 bis 6, **dadurch gekennzeichnet, dass** auf dem mindestens einem Draht das Muster (4) mechanisch auftragbar ist.

9. Sicherungseinrichtung (0) gemäß einem der Ansprüche 1 bis 6, **dadurch gekennzeichnet, dass** auf dem mindestens einem Draht das Muster (4) chemisch auftragbar ist

10. Sicherungseinrichtung (0) gemäß einem der Ansprüche 1 bis 6, **dadurch gekennzeichnet, dass** auf dem mindestens einem Draht das Muster (4) durch einen Laser aufbringbar ist.

11. Verfahren zur Validierung der Sicherheit mittels einer Sicherungseinrichtung (0) gemäß einem der Ansprüche 1 bis 10, **dadurch gekennzeichnet, dass**
• ein ursprüngliches Muster (4) auf mindestens einen geraden Draht (1) aufgebracht wird,
• der mindestens eine Draht (1) zur Generierung eines individuellen Fingerabdrucks verdrillt wird,
• ein Objekt, eine Vorrichtung, eine Ausrüstung, eine Verpackung, eine Schutzhülle und/oder ein Gerät mit dem verdrillten Draht (1) als Siegel versiegelt wird,
• das ursprüngliche Muster (4) auf dem Draht (1) optisch, per Ultraschall oder radiographisch erfasst wird,
• das ursprünglich aufgenommene Muster (4) in Computercode umgewandelt wird,
• nach einem Zeitintervall das dann auf dem Draht (1) vorhandene Muster (4) optisch, per Ultraschall oder radiographisch erfasst wird,
• Vergleich des nach einem Zeitintervall erfassten Musters (4) mit dem ursprünglich aufgenommenen Muster (4) zur Verifikation des Siegels.

12. Verfahren zur Validierung der Sicherheit mittels einer Sicherungseinrichtung (0) gemäß einem der Ansprüche 1 bis 10, **dadurch gekennzeichnet, dass**
• mindestens ein Draht (1) verdrillt wird,
• ein Objekt, eine Vorrichtung, eine Ausrüstung, eine Verpackung, eine Schutzhülle und/oder ein Gerät mit dem verdrillten Draht (1) als Siegel versiegelt wird,
• ein ursprüngliches Muster auf den verdrillten Draht (1) aufgebracht wird,
• das ursprüngliche Muster (4) auf dem Draht (1) optisch, per Ultraschall oder radiographisch erfasst wird,
• das ursprünglich aufgenommene Muster (4) in Computercode umgewandelt wird,
• nach einem Zeitintervall das dann auf dem Draht (1) vorhandene Muster optisch, per Ultraschall oder radiographisch erfasst wird,
• Vergleich des nach einem Zeitintervall erfassten Musters (4) mit dem ursprünglich aufgenommenen Muster (4) zur Verifikation des Siegels.

## Claims

1. Securing device (0), wherein the securing device (0) comprises at least one twisted wire (1), the twisted wire (1) comprising one or more wires, **characterized in that** the one or more wires comprise a pattern (4), the pattern (4) being a detectable, permanent deviation on the surface of the one or more wires, wherein an individual pattern of the twisted wire (1) is formed by the pattern (4) of the one or more wires in their twisted state, such that the twisted wire (1) has an individual pattern as a unique fingerprint.

2. Securing device (0) according to claim 1, **characterized in that** information can be stored in the pattern (4).

3. Securing device (0) according to claim 2, **characterized in that** the information comprises product and/or process properties.

4. Securing device (0) according to claim 2 or 3, **characterized in that** the pattern (4) comprises information on the manufacture and/or maintenance of an object, device, equipment and/or apparatus.

5. Securing device (0) according to any of claims 2 to 4, **characterized in that** the pattern (4) is a QR code.

6. Securing device (0) according to any of the preceding claims, **characterized in that** the at least one wire (1) comprises at least one plastic deformation (2).

7. Securing device (0) according to any of claims 1 to 6, **characterized in that** the pattern (4) can be applied as lacquer to the at least one wire.

8. Securing device (0) according to any of claims 1 to 6, **characterized in that** the pattern (4) can be applied mechanically to the at least one wire.

9. Securing device (0) according to any of claims 1 to 6, **characterized in that** the pattern (4) can be applied chemically to the at least one wire.

10. Securing device (0) according to any of claims 1 to 6, **characterized in that** the pattern (4) can be applied to the at least one wire by a laser.

11. Method for validating security by means of a securing device (0) according to any of claims 1 to 10, **characterized in that:**
• an original pattern (4) is applied to at least one straight wire (1),
• the at least one wire (1) is twisted to generate an individual fingerprint,
• an object, device, equipment, packaging, protective cover and/or apparatus is sealed with the twisted wire (1) as a seal,
• the original pattern (4) on the wire (1) is detected optically, by ultrasound or radiographically,
• the originally recorded pattern (4) is converted into computer code,
• the pattern (4) on the wire (1) is detected optically, by ultrasound or radiographically after a time interval,
• the pattern (4) detected after a time interval is compared with the originally recorded pattern (4) to verify the seal.

12. Method for validating security by means of a securing device (0) according to any of claims 1 to 10, **characterized in that:**
• at least one wire (1) is twisted,
• an object, device, equipment, packaging, protective cover and/or apparatus is sealed with the twisted wire (1) as a seal,
• an original pattern (4) is applied to the twisted wire (1),
• the original pattern (4) on the wire (1) is detected optically, by ultrasound or radiographically,
• the originally recorded pattern (4) is converted into computer code,
• the pattern (4) on the wire (1) is detected optically, by ultrasound or radiographically after a time interval,
• the pattern (4) detected after a time interval is compared with the originally recorded pattern (4) to verify the seal.

## Revendications

1. Dispositif de sécurité (0), le dispositif de sécurité (0) présentant au moins un fil torsadé (1), le fil torsadé (1) présentant un ou plusieurs fils, **caractérisé en ce que** ledit un ou lesdits plusieurs fils présentent un motif (4), le motif (4) étant un écart détectable et durable sur la surface dudit un ou desdits plusieurs fils, un motif individuel du fil torsadé (1) étant formé par le motif (4) dudit un ou desdits plusieurs fils dans leur état torsadé, de telle sorte que le fil torsadé (1) présente un motif individuel en tant qu'empreinte digitale unique.

2. Dispositif de sécurité (0) selon la revendication 1, **caractérisé en ce que** des informations peuvent être mémorisées dans le motif (4).

3. Dispositif de sécurité (0) selon la revendication 2, **caractérisé en ce que** les informations comprennent des caractéristiques de produit et/ou de processus.

4. Dispositif de sécurité (0) selon la revendication 2 ou 3, **caractérisé en ce que** le motif (4) comprend des informations relatives à la fabrication et/ou à la maintenance d'un objet, d'un dispositif, d'un équipement et/ou d'un appareil.

5. Dispositif de sécurité (0) selon l'une des revendications 2 à 4, **caractérisé en ce que** le motif (4) est un code QR.

6. Dispositif de sécurité (0) selon l'une des revendications précédentes, **caractérisé en ce que** ledit au moins un fil (1) présente au moins une déformation plastique (2).

7. Dispositif de sécurité (0) selon l'une des revendications 1 à 6, **caractérisé en ce que** le motif (4) peut être appliqué sous forme de vernis sur ledit au moins un fil.

8. Dispositif de sécurité (0) selon l'une des revendications 1 à 6, **caractérisé en ce que** le motif (4) peut être appliqué mécaniquement sur ledit au moins un fil.

9. Dispositif de sécurité (0) selon l'une des revendications 1 à 6, **caractérisé en ce que** le motif (4) peut être appliqué chimiquement sur ledit au moins un fil.

10. Dispositif de sécurité (0) selon l'une des revendications 1 à 6, **caractérisé en ce que** le motif (4) peut être appliqué par un laser sur ledit au moins un fil.

11. Procédé de validation de la sécurité au moyen d'un dispositif de sécurité (0) selon l'une des revendications 1 à 10, **caractérisé en ce que** •
• un motif initial (4) est appliqué sur au moins un fil droit (1),
• ledit au moins un fil (1) est torsadé pour générer une empreinte digitale individuelle,
• un objet, un dispositif, un équipement, un emballage, une enveloppe de protection et/ou un appareil est scellé avec le fil torsadé (1) en tant que sceau,
• le motif initial (4) sur le fil (1) est acquis optiquement, par ultrasons ou par radiographie,
• le motif (4) initialement saisi est converti en code informatique,
• après un intervalle de temps, le motif (4) alors présent sur le fil (1) est acquis optiquement, par ultrasons ou par radiographie,
• comparaison du motif (4) acquis après un intervalle de temps avec le motif (4) initialement saisi pour la vérification du sceau.

12. Procédé de validation de la sécurité au moyen d'un dispositif de sécurité (0) selon l'une des revendications 1 à 10, **caractérisé en ce que**
• au moins un fil (1) est torsadé,
• un objet, un dispositif, un équipement, un emballage, une enveloppe de protection et/ou un appareil est scellé avec le fil torsadé (1) en tant que sceau,
• un motif initial est appliqué sur le fil torsadé (1),
• le motif initial (4) sur le fil (1) est acquis optiquement, par ultrasons ou par radiographie,
• le motif (4) initialement saisi est converti en code informatique,
• après un intervalle de temps, le motif alors présent sur le fil (1) est acquis optiquement, par ultrasons ou par radiographie,
• comparaison du motif (4) acquis après un intervalle de temps avec le motif (4) initialement saisi pour la vérification du sceau.
